# EUROPÄISCHE PATENTANMELDUNG

(11) **EP 1 650 540 A2**
(43) Veröffentlichungstag der Anmeldung: **26.04.2006**
(21) Anmeldenummer: 05022011.0
(22) Anmeldetag: 10.10.2005
(51) Int. Cl.: G01L 5/00, B23Q 17/09

(54) **Sensorsystem für eine spanabhebende Werkzeugmaschine**

(30) Priorität: 20.10.2004 DE 102004051145
(71) Anmelder: ARTIS Ges. für angewandte Messtechnik mbH, 29646 Bispingen-Behringen (DE)
(72) Erfinder: Redecker, Volker, 29646 Bispingen (DE); Lange, Dirk, Dr.-Ing., 21335 Lüneburg (DE); Brinkhaus, Jan-Wilm, 30161 Hannover (DE)
(74) Vertreter: Hess, Peter K. G.

(57) **Zusammenfassung**

Die vorliegende Erfindung betrifft ein Sensorsystem für eine spanabhebende Werkzeugmaschine mit einer Energieversorgungseinheit (101), die aus einem magnetischen Wechselfeld (B) induktiv Energie zur Versorgung zumindest einer Sensoreinrichtung (110) der spanabhebenden Werkzeugmaschine bereitstellt, zumindest eine Sensoreinrichtung, die eine in der spanabhebenden Werkzeugmaschine auftretende Kraft und/oder ein Drehmoment und/oder den Körperschall in der spanabhebenden Werkzeugmaschine misst, und einer Datensendeinheit (120), die drahtlos Daten sendet, die sich auf einen Wert beziehen, der von der zumindest einen Sensoreinrichtung (110) der spanabhebenden Werkzeugmaschine gemessen worden ist.

## Beschreibung

### 1. Technisches Gebiet

Die vorliegende Erfindung betrifft ein Sensorsystem für eine spanabhebende Werkzeugmaschine und eine mit einem Sensorsystem ausgestatte Werkzeugmaschine dieser Art.

### 2. Der Stand der Technik

Moderne spanabhebende Werkzeugmaschinen führen nach einmaliger Programmierung mehr und mehr komplexe und langwierige Bearbeitungsprozesse durch. Je mehr der Mensch bei der Überwachung eines solchen Prozesses in den Hintergrund tritt, desto mehr muss die Werkzeugmaschine sich selbst überwachen können. Hierzu werden üblicherweise Sensoren in oder an der Werkzeugmaschine angeordnet, bei denen sowohl die Daten- als auch die Energieübertragung über Kabel erfolgt. Diese Kabel werden entweder direkt an die Sensoren geführt oder an induktive Übertragungseinrichtungen in unmittelbarer räumlicher Nähe. Mittels solcher Sensoren überwacht die Steuerung der Werkzeugmaschine oder eine mit ihr verbundene Überwachungsanlage Prozesszustände, beispielsweise Bohren oder Fräsen eines Metalls, und reagiert in geeigneter Weise auf Abweichungen gegenüber einem vorbestimmten Prozessverhalten.

Die Integration von Sensoren und Überwachungsmodulen in spanabhebende Werkzeugmaschinen ist schwierig: Viele Messstellen sind schwer zugänglich und weisen kleine Baugrößen auf. Haupterschwernis ist jedoch der Umstand, dass die zu überwachenden Teile einer spanabhebenden Werkzeugmaschine, z.B. Bohrer und Fräser, rotieren. Man greift daher oft auf eine Überwachung von Sekundär- größen zurück. Anstelle der Messung des Drehmomentes eines Bohrers misst man z.B. behelfsweise den Energieverbrauch des ihn antreibenden Motors. Solche Messungen von Sekundärgrößen reichen für manche Anwendungsfälle aus, sind aber oft ungenau. Wünschenswert ist daher eine Messung möglichst direkt an der Wirkstelle.

Aus der DE 199 26 799 A1 ist es bekannt, einen Abstandssensor in einem Industrieroboter o.ä. zu verwenden, der über ein von einer Primärspule erzeugtes Magnetfeld mit elektrischer Energie versorgt wird und Funksignale über die mit dem Sensor erfasste Information abgibt. Neben dem Abstandssensor enthält die DE 199 26 799 A1 eine abschließende Aufzählung anderer möglicher Sensoren, die nach diese Prinzip arbeiten können, nämlich Temperatursensoren, Druckmeßsensoren, Strommeßsensoren oder Spannungsmeßsensoren. Einen Hinweis auf eine spanabhebende Werkzeugmaschine und die sich im Zusammenhang mit den Arbeitsschritten des Bohrens und Fräsens stellenden Anforderung an eine Überwachungssensorik lässt sich der DE 199 26 799 A1 nicht entnehmen. Dies gilt auch für die DE 101 50 128 A1, die ein ähnliches Sensorsystem offenbart.

Hingegen sind drahtlose Sensorsysteme für spanabhebende Werkzeugmaschinen aus der DE 44 32 808 A1 und der DE 101 63 734 A1 bekannt. Die DE 44 32 808 A1 offenbart ein System, welches mittels transformatorischer Kopplung in der Lage ist, Spannungssignale eines Sensors, der direkt an die Sekundärspule einer transformatorähnlichen Anordnung angeschlossen ist, zu übertragen. Hierbei entstehen sekundärseitig Spannungen, welche ohne Nachbearbeitung aus dem gemessenen Signal selbst erzeugt werden und primärseitig abgegriffen werden können. Dieses System ermöglicht den Betrieb von Sensoren an schwer zugänglichen oder rotierenden Elementen der spanabhebenden Werkzeugmaschine, beispielsweise der Aufnahme eines Bohrers oder eines Fräsers. Es stellt aber keine Lösung für Sensoriken dar, die nicht direkt an eine induktive Übertragungsstrecke anzuschließen sind. Dazu zählen insbesondere die heutzutage üblichen Dehnungsmessstreifen (DMS), mit denen Normalkräfte und Drehmomente an Wellen einer spanabhebenden Werkzeugmaschine gemessen werden.

Die DE 101 63 734 A1 beschreibt ein System, bei dem die Sensorik einer spanabhebenden Werkzeugmaschine einem magnetischen Wechselfeld ausgesetzt wird, um die erforderliche Betriebsenergie zu gewinnen. Die Energiegewinnung funktioniert gemäß dem Transformatorprinzip. Die energieerzeugende Spule bildet dabei die Primärspule und die Spule der Sensorik stellt die Sekundärspule dar. Die Übertragung der von der Sensorik an der Werkzeugmaschine aufgenommenen Daten erfolgt mittels Lastmodulation des eingestrahlten magnetischen Wechselfelds durch die Sensorik. Bei einer geeigneten Ausrichtung der Primär- und der Sekundärspule bleibt die Induktionswirkung und die Signalübertragung von einer Rotation eines zu vermessenden Bereichs unbeeinflusst, weshalb sich dieses Verfahren insbesondere für die Überwachung spanabhebender Werkzeugmaschinen eignet. Da nur eine einzige Sekundärspule in der Werkzeugmaschine benötigt wird, lässt sich das offenbarte System außerordentlich platzsparend realisieren und kann daher auch im Bereich der kleinen Aufnahmen für die üblichen Werkzeuge einer spanabhebenden Werkzeugmaschine, beispielsweise eines einzelnen Bohrers oder eines Fräsers, integriert werden.

### Trotzdem weist dieses Verfahren in der Praxis eine Reihe von Nachteilen auf:

Als Frequenz des magnetischen Wechselfelds, das die Energie für die Sensorik überträgt und gleichzeitig die Daten übermittelt, kommt im Allgemeinen der Bereich bis zu 125kHz zum Einsatz. Dieser Frequenzbereich ist sinnvoll für die effektive Energieübertragung, da in der Nähe von Metallen magnetische Wechselfelder durch Wirbelströme gedämpft werden und dieser Effekt mit höheren Frequenzen stärker wird. Um möglichst viel Energie zu übertragen, ist es daher üblich im Bereich bis 125kHz zu bleiben. Die Datenübertragungsrate einer Übertragungsstrecke hängt jedoch vor allem von der Frequenz der Trägerwelle ab und kann jeweils nur einen Bruchteil von ihr betragen. Das Verfahren gemäß der DE 101 63 734 A1 führt daher bei Trägerwellen von 125kHz zu Datenraten von ungefähr 4kBaud. Dadurch wird die von der Sensorik bereitgestellte Information sowohl in ihrem Umfang als auch in ihrer Aktualität stark eingeschränkt.

Ferner verringert die Übertragung von Daten von der Sensorik zu der energieversorgenden Einheit die Energie, welche der Sensor aus dem ihn umgebenden Feld erzeugen kann, da dessen Feldstärke prinzipbedingt variiert werden muss. Im Ergebnis wird dadurch entweder die Daten- oder die Energiemenge begrenzt, welche von bzw. an die Sensorik übertragen werden kann.

Sind mehrere Sensoriken an einer spanabhebenden Werkzeugmaschine vorgesehen, müssen sie sich die maximal zur Verfügung stehende Datenrate teilen. Die bereits begrenzte Datenrate sinkt dadurch weiter ab.

Schließlich müssen Systeme, die eine induktive Energieübertragung verwenden, aufgrund von Streueffekten hohe Energiemengen in die Primärspule einbringen, insbesondere, wenn beispielsweise aus baulichen Gründen hohe Rechweiten der Energieübertragung verlangt werden. Je höher diese Energiemengen sind, desto schwieriger wird es, aus ihrem Eingangssignal die Lastmodulation eines Sensors zu extrapolieren. Im Ergebnis lassen sich daher bei dem System gemäß der DE 101 63 734 A1 nur begrenzte Reichweiten erzielen.

Der vorliegenden Erfindung liegt daher das Problem zugrunde ein Sensorsystem für eine spanabhebende Werkzeugmaschine bereitzustellen, dass die oben erläuterten Nachteile des Stands der Technik überwindet und insbesondere höhere Datenraten für die Übertragung der vom Sensorsystem aufgenommenen Werte ermöglicht und große Reichweiten erlaubt und dabei die Besonderheiten der Anforderungen einer spanabhebenden Werkzeugmaschine berücksichtigt.

### 3. Zusammenfassung der Erfindung

Die vorliegende Erfindung löst dieses Problem durch die Bereitstellung eines Sensorsystems für eine spanabhebende Werkzeugmaschine mit einer Energieversorgungseinheit, die aus einem magnetischen Wechselfeld induktiv Energie zur Versorgung zumindest einer Sensoreinrichtung der spanabhebenden Werkzeugmaschine bereitstellt, zumindest einer Sensoreinrichtung, die eine in der spanabhebenden Werkzeugmaschine auftretende Kraft und / oder ein Drehmoment und / oder den Körperschall in der spanabhebenden Werkzeugmaschine misst, und einer Datensendeinheit, die drahtlos Daten sendet, die sich auf einen Wert beziehen, der von der zumindest einen Sensoreinrichtung der spanabhebenden Werkzeugmaschine gemessen worden ist.

Die Anmelderin hat entgegen der Lehre im oben erläuterten Stand der Technik zur Sensorik spanabhebender Werkzeugmaschinen erstmals erkannt, dass sich aufgrund der fortschreitenden Miniaturisierung der Messelektronik und Sensorik zur Messung einer Kraft, eines Drehmoments und / oder von Körperschall auch in einer spanabhebenden Werkzeugmaschine mit kompakten rotierenden Bauteilen die Funktion der Energieversorgung einerseits und der drahtlosen Datenübertragung der gemessenen Information andererseits voneinander trennen lassen. Da somit die drahtlose Datenübertragung unabhängig vom magnetischen Wechselfeld der Energieversorgung erfolgt, lässt sich eine deutlich höhere Datenübertragungsrate erzielen, selbst wenn die zur Verfügung stehende Bandbreite auf mehrere Sensoreinrichtungen aufgeteilt wird. Im Ergebnis lassen sich mehr Messwerte mit kürzeren Zeitabständen übertragen. Dies ist insbesondere dann von Bedeutung, wenn diese Messwerte unmittelbar in die Steuerung der spanabhebenden Werkzeugmaschine rückgekoppelt werden und damit eine präzisere Bearbeitung eines Werkstücks ermöglichen.

Ferner steht der Sensoreinrichtung mehr Energie zur Verfügung als in den Systemen nach dem Stand der Technik, da das energieversorgende magnetische Wechselfeld in einem Arbeitspunkt betrieben werden kann, der für die Energieübertragung optimal ist. Eine Modulation dieses Feldes zur Datenübertragung ist nicht mehr nötig. Im Ergebnis kann daher die Sensoreinrichtung über mehrere Meter Entfernung mit Energie versorgt werden. Dies schafft für die Anordnung einer oder mehrerer Sensoreinrichtungen an der Werkzeugmaschine deutlich größere Freiheiten als die Messvorrichtungen aus dem Stand der Technik.

Im Ergebnis wird damit ein Sensorsystem bereitgestellt, das keine eigene Energieversorgung benötigt, eine dynamische Ankopplung von überwachenden Sensoren in einer spanabhebenden Werkzeugmaschine erlaubt, Umbauten von Sensoren innerhalb bestehender Systeme erleichtert und die prozessnahe Erfassung einer Vielzahl der genannten physikalischen Größen ermöglicht.

Das magnetische Wechselfeld und die Datenübertragung verwenden bevorzugt unterschiedliche Frequenzen, wobei die Frequenz des magnetischen Wechselfelds bevorzugt ≤ 125 kHz beträgt und wobei die Frequenz der Datenübertragung vorzugsweise>125 kHz beträgt und besonders bevorzugt im MHz-Bereich liegt, insbesondere im Bereich ≥ 10 MHz. Die beiden Frequenzen lassen sich somit für ihren jeweiligen Einsatzzweck (Energieübertragung bzw. Datenübertragung) optimieren.

Bevorzugt weist das Sensorssystem ferner eine Datenempfangseinheit auf, um eine bidirektionale Datenübertragung von und zu dem Sensorsystem zu ermöglichen. Dadurch lassen sich beispielsweise die Einstellungen zur Verstärkung, zum Nullpunktabgleich, zu einem oder mehreren Filtern, der Abtastrate und der Auswertung von Signalspitzen eines oder mehrerer Sensoren der Sensoreinrichtung parametrieren.

Vorzugsweise weist das Sensorsystem ferner eine Empfangseinheit zum Empfangen der von der Datensendeinheit gesandten Daten auf, die bevorzugt eine Schnittstelle zur Steuerung der spanabhebenden Werkzeugmaschine bereitstellt. Die Betriebsparameter der spanabhebenden Werkzeugmaschine, z.B. Drehzahl und Vorschub eines Bohrers, können damit automatisch auf die vom Sensorsystem aufgenommenen Werte reagieren.

In einem gegenwärtig besonders bevorzugten Ausführungsbeispiel der Erfindung weist das Sensorsystem ferner einen Prozessor auf, der die Funktionen der Energieversorgungseinheit und / oder der Sensoreinrichtung und / oder der Datensendeeinheit steuert. Ferner ist vorzugsweise ein Speicher mit Anweisungen für den Prozessor vorgesehen. Besonders vorteilhaft ist es, wenn die Anweisungen für den Prozessor über die Datenempfangseinheit aktualisiert werden können. Damit kann das Sensorsystem flexibel auf unterschiedlichste Anforderungen angepasst werden.

Die genannte Sensoreinrichtung umfasst vorzugsweise einen oder mehrere der folgenden Sensoren: Zumindest einen Dehnungsmessstreifen zur Erfassung eines Drehmoments und / oder einer Kraft, einen Beschleunigungssensor, einen Sensor für Körperschall und / oder Luftschall, insbesondere auf der Basis eines piezoelektrischen Elements, und einen Temperatursensor, insbesondere auf Halbleiterbasis und / oder auf Basis der Messung eines elektrischen Widerstands.

Ferner umfasst das Sensorsystem bevorzugt eine Erzeugungseinheit für das magnetische Wechselfeld, wobei die Erzeugungseinheit vorzugsweise ein Paar von Spulen aufweist.

Darüber hinaus verwendet das Sensorsystem in einer Ausführungsform eine Mehrzahl von Sensoreinrichtungen, die an unterschiedlichen Stellen einer oder mehrerer spanabhebender Werkzeugmaschinen angeordnet sind. Anders als mit den bekannten Sensorsystemen von spanabhebenden Werkzeugmaschinen können somit an vielen verschiedenen Stellen einer oder mehrerer Werkzeugmaschinen Messwerte aufgenommen werden und gegebenenfalls als Rückkopplungssignale für die Steuerung der Maschine(n) verwendet werden.

Weitere Fortentwicklungen des erfindungsgemäßen Sensorsystems sind in den weiteren abhängigen Patentansprüchen erläutert.

Gemäß eines weiteren Aspekts betrifft die vorliegende Erfindung eine spanabhebende Werkzeugmaschine mit einem der oben erläuterten Sensorsysteme.

### 4. Kurze Beschreibung der begleitenden Figuren

Im Folgenden werden Aspekte der vorliegenden Erfindung unter Bezugnahme auf die begleitenden Figuren genauer erläutert. Diese Figuren zeigen:
- Fig. 1:: eine schematische Gesamtdarstellung der verschiedenen Komponenten eines Ausführungsbeispiels der vorliegenden Erfindung;
- Fig. 2:: eine Gesamtansicht der Komponenten im Ausführungsbeispiel aus Fig. 1 mit einer Detaildarstellung der an einer spanabhebenden Werkzeugmaschine angeordneten Sensoren;
- Fig. 3:: ein weiteres Ausführungsbeispiel mit auf einem Arbeitstisch einer spanabhebenden Werkzeugmaschine angeordneten Sensoren;
- Fig. 4:: ein weiteres Ausführungsbeispiel mit auf einem Mehrspindelbohrkopf angeordneten Sensoren, und
- Fig. 5:: eine schematische Gesamtansicht des Signalsverlaufs in den Ausführungsbeispielen aus Fign. 1 und 2.

### 5. Detaillierte Beschreibung bevorzugter Ausführungsbeispiele

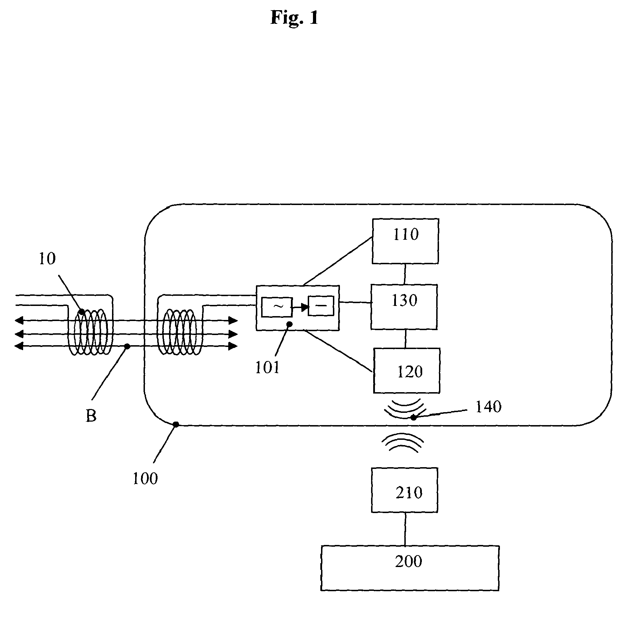

Im Folgenden werden gegenwärtig bevorzugte Ausführungsbeispiele des erfindungsgemäßen Sensorsystems anhand von Sensormodulen für eine spanabhebende Werkzeugmaschine näher erläutert. Fig. 1 zeigt zur Erläuterung des Grundprinzips eine schematische Übersichtsdarstellung der Komponenten des Sensorsystems in einem ersten bevorzugten Ausführungsbeispiel. Eine Primärspule 10 erzeugt auf einer Frequenz von vorzugsweise bis zu 125kHz ein magnetisches Wechselfeld B. Besonders bevorzugt ist ein Frequenzbereich von 10 kHz bis 125 kHz. Das Wechselfeld B dient zum Betrieb eines oder mehrerer Sensormodule 100. Innerhalb des Sensormoduls 100 wird mit einer Spannungsversorgungseinheit 101 aus dem Wechselfeld B eine Versorgungsspannung für die verschiedenen Komponenten des Sensormoduls 100 generiert. In dem in Fig. 1 vereinfacht dargestellten Ausführungsbeispiel sind dies die Sensoreinrichtung 110, eine Funkschnittstelle 120 und eine umsetzende Schaltung, die als ein Mikrokontroller 130 ausgebildet sein kann.

Die Sensoreinrichtung 110, deren mögliche Ausgestaltung weiter unten erläutert wird, stellt einen oder mehrere Messwerte bereit, die an den Mikrokontroller 130 übertragen werden. Der Mikrokontroller 130 überträgt die gegebenenfalls zwischengespeicherten und / oder weiterverarbeiteten Daten mittels der Funkschnittstelle 120 über elektromagnetische Funkwellen 140 zur Funkschnittstelle 210 eines Empfangsgerätes 200. Dieses Gerät wiederum kann mit der Maschinensteuerung oder einem Überwachungsgerät der spanabhebenden Werkzeugmaschine verbunden werden, das mit der Steuerung kommuniziert, um eine Rückkopplung an die Werkzeugmaschine (in Fig. 1 nicht dargestellt) herbeizuführen.

Der Mikrokontroller 130 wird bevorzugt über eine Firmware gesteuert, die in einem Speicher (nicht dargestellt) des Sensormoduls 100 abgelegt wird. Besonders vorteilhaft ist es, wenn die Funkstrecke zwischen den beiden Funkschnittstellen 120 und 210 bidirektional ausgebildet ist. Dann kann die Firmware des Mikrocontrollers 130 von Ferne durch die Übertragung geeigneter Datenpakete aktualisiert werden, um sie an geänderte Anforderungen anzupassen, beispielsweise, wenn sich die Betriebsweise der mit dem Sensormodul 100 überwachten Werkzeugmaschine grundsätzlich geändert hat oder wenn das Sensormodul für eine andere spanabhebende Werkzeugmaschine verwendet wird. Dies erleichtert die modulare Verbindung zwischen dem Sensormodul 100 und der überwachten Werkzeugmaschine.

Zum Aktualisieren der Firmware ist es ferner denkbar, dass ein zweiter Mikrokontroller (nicht dargestellt) auf dem Sensormodul 100 auf Basis der zum Firmwareupdate übertragenen Daten die Kontrolle zugewiesen bekommt und den Programmspeicher erneuert.

Darüber hinaus ermöglicht die bidirektionale Funkstrecke, dass das Sensormodul 100 nicht nur Daten sendet, sondern auch bestimmte Daten empfängt und diese selbsttätig verarbeitet. Dies gilt vor allem für allgemeine Konfigurationsdaten, welche das Betriebsverhalten beeinflussen. Sinnvoll ist vor allem:
- von außen einen Verstärkungsfaktor vorgeben zu können, der bestimmt, wie stark ein Messsignal verstärkt wird, bevor die eigentliche Messung stattfindet.
- von außen die Parameter für Signalfilter vorgeben zu können. Sinnvoll sind zum Beispiel die Anzahl von Messungen, über die intern eine Signalmittelung erfolgen soll, bevor die so ermittelten Daten als Messwert ausgesandt werden.
- von außen Kalibrierungsdaten an das Sensormodul 100 zu schicken. Zweckmäßig ist zum Beispiel der Befehl, den Nullpunkt einer Messung auf den Wert X eines intern ermittelten Messdatums festzulegen.

Ferner ist es für manche Anwendungen vorteilhaft, wenn auf dem Sensormodul 100 ein Messdatenspeicher (nicht dargestellt) vorhanden ist. Das Sensormodul 100 kann dann Messdaten über einen bestimmten Zeitraum vorhalten und auf Anfrage beispielsweise Auswertungen der Signale vornehmen. Denkbar ist auch, dass eine Sensoreinrichtung 110 oder das gesamte Sensormodul 100 auf Basis eines solchen Messdatenspeichers bestimmte Kennwerte seines Betriebs eigenständig ändert, z.B. durch eine Anpassung des Nullpunktes und / oder des Messbereichs.

Darüber hinaus ist es denkbar, dass die Sensoreinrichtung 110 oder das gesamte Sensormodul 100 Selbstdiagnosen durchführt um fehlerhafte Betriebsarten zu erkennen. Dies kann in erster Linie durch Selbsttests oder auch durch die Erkennung und Meldung von unlogischen/unmöglichen Messwertkombinationen geschehen.

Schließlich ist es sinnvoll, wenn das Sensormodul 100 die bisherige Betriebszeit der Werkzeugmaschine oder eines Teils der Werkzeugmaschine erfasst, beispielsweise, indem entsprechende Daten in dem oben genannten Messdatenspeicher vorgehalten werden. Damit lässt sich der Zustand "wird aktuell benutzt" oder "wird aktuell nicht benutzt", aus den Sensordaten extrahieren.

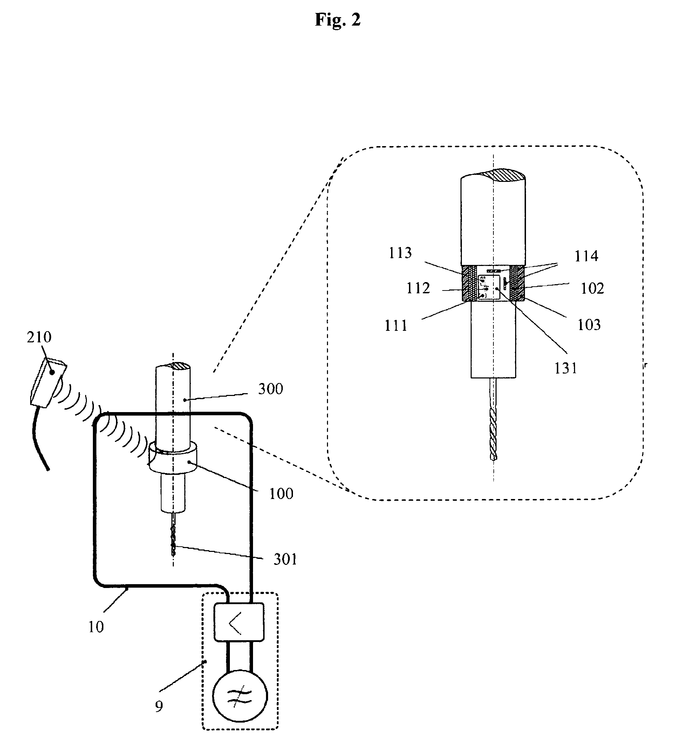

Fig. 2 zeigt eine genauere Darstellung der in Fig. 1 nur schematisch dargestellten Komponenten. Das magnetische Feld B wird von einem Feldgenerator 9 und einer Feldspule 10 erzeugt, so dass das Feld B (nicht dargestellt) auf die spanabhebende Werkzeugmaschine 300 (nur ausschnittsweise in Fig. 2 dargestellt) und insbesondere das daran angeordnete Sensormodul 100 einwirkt. Das Sensormodul 100 liefert Messwerte zu einem von der Werkzeugmaschine durchgeführten Arbeitsschritt, beispielsweise das gegenwärtig aufgebrachte Drehmoment des Bohrers 301. Diese Messwerte werden im Modul 100 verarbeitet und per Funk an die Antenne 210 übertragen.

Der Detailausschnitt in Fig. 2 zeigt einen bevorzugten Aufbau des Sensormoduls 100: Um die Achse des Bohrers 301 herum sind ringförmig eine oder mehrere Spulen 102 angeordnet, in denen durch das äußere Feld B, das vom Feldgenerator 9 und der Spule 10 bereitgestellt wird, ein Strom induziert wird. Aufgrund der zur Rotationsachse des Bohrers 301 senkrechten Ausrichtung der Spulenebene bleibt die Induktion von Strom von einer Drehung der Bohrers unbeeinflusst. Zum Schutz vor einer Beschädigung sind die Spulen 102 in ein ringförmiges Element 103 vergossen. Durch die Auswahl eines geeigneten Materials des vergossenen Elements 103 kann zudem die Induktion von Strom in den Spulen 102 unterstützt werden. Die äußere Feldspule 10 und die Spulen 102 sind vorzugsweise parallel zueinander ausgerichtet, um eine maximale Induktion zu erzielen.

Fig. 2 zeigt schematisch eine Vielzahl von Sensoren. Beispielsweise kann mit einen Sensor 111 Körperschall während und außerhalb einer Bearbeitung eines Werkstücks erfasst werden. Dabei kommen bevorzugt piezobasierte Körperschallaufnehmer zum Einsatz. Fig. 2 zeigt ferner schematisch einen Temperatursensor 112, der beispielsweise Halbleitermaterialien verwendet oder den sich mit der Temperatur ändernden elektrischen Widerstand erfasst (beispielsweise ein handelsübliches Pt-100 Element). Daneben zeigt Fig. 2 auch einen Beschleunigungssensor 113.

Drehmomente und Vorschubkräfte werden vorzugsweise mit einem oder mehreren Dehnungsmessstreifen (DMS) gemessen. Bevorzugt werden zwei im Wesentlichen senkrecht zueinander ausgerichtete Dehnungsmessstreifen 114 verwendet, um Dehnungen in mehreren Raumrichtungen zu erfassen. Zum Auslesen der DMS erzeugt man vorzugsweise einen Tiefpass, indem man den DMS mit einem Kondensator (nicht dargestellt) verschaltet, auf den man ein gepulstes Eingangssignal gibt. Durch Vermessung der Zeitkonstanten des Antwortsignals am Tiefpassausgang (Kondensator) lässt sich die DMS-Auswertung auf eine Zeitmessung zurückführen, was in Bezug auf den Energieverbrauch des Sensormoduls 100 besonders günstig ist und daher bei der drahtlosen Energieversorgung des Sensormoduls 100 zusätzliche Vorteile bringt.

In einer abgewandelten Ausführungsform (nicht dargestellt) werden die DMS 114 zu Messbrücken in einer Wheatstone-Schaltung verbunden und ihr Ausgangssignal entweder direkt oder nach einer Signalaufbereitung digitalisiert.

Über die in Fig. 2 schematisch dargestellten Sensoren 111 - 114 hinaus können mit weiteren Sensoren (nicht dargestellt) beispielsweise der Luftschall oder auch andere physikalische Größen überwacht werden, die für die von der Werkzeugmaschine 300 durchgeführten spanabhebenden Bearbeitungsschritte von Bedeutung sind, um eine fehlerfreie Funktion sicherzustellen.

Die Signale von den Sensoren 111 - 114 werden über einen digitalen oder analogen Bus (in Fig. 2 nicht dargestellt) einer Verarbeitungselektronik 131 zugeführt, die beispielsweise den oben genannten Mikrokontroller 130 und die Funkschnittstelle 120 enthalten kann (in Fig. 2 nicht dargestellt). Die Elektronik 131 ist bevorzugt auf einer flexiblen Leiterplatte angeordnet oder auf einer segmentierten Leiterplatte, um sich der Bauform der spanabhebenden Werkzeugmaschine 300 anpassen zu können.

Wie in linken Teil von Fig. 2 ebenfalls dargestellt, baut das Sensormoduls 100 eine Funkverbindung zu der externen Antenne 210 auf, mit der die aufbereiteten Daten schließlich an eine in Fig. 2 nicht gezeigte Auswerteschaltung übertragen werden, die gegebenenfalls zur Rückkopplung mit der Steuerung der Werkzeugmaschine 300 verbunden ist.

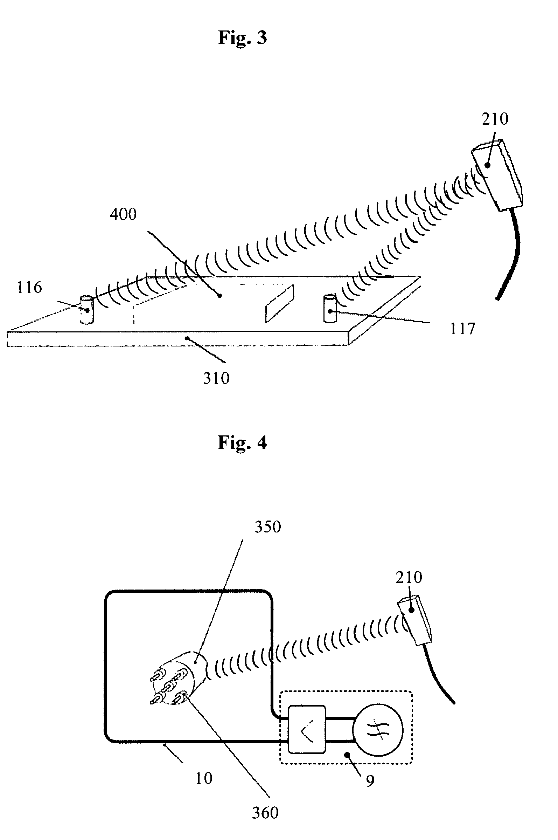

Die Figuren 3 und 4 zeigen weitere beispielhafte Anordnungen von Sensoren. So zeigt Fig. 3 einen Arbeitstisch 310 einer spanabhebenden Werkzugmaschine auf dem sich ein Werkstück 400 befindet. Zur Überwachung der Bearbeitungsvorgänge sind ein Schwingungssensor 116 und ein Körperschallaufnehmer 117 angeordnet. In Fig. 3 sind die Sensoren 116 und 117 Bestandteile von zwei unabhängigen Sensormodulen, die beide über eigene Funkschnittstellen (nicht dargestellt) mit der Antenne 210 kommunizieren. Die Energieversorgung der beiden Sensormodule erfolgt jedoch über ein gemeinsam genutztes äußeres Wechselfeld (in Fig. 3 nicht dargestellt).

Fig. 4 hingegen zeigt eine Anordnung, in der in einer Mehrkoptbohrspindel 350 mehrere Werkzeughalter 360 angeordnet sind, die jeweils mehrere Drehmomentsensoren, Sensoren für die Vorschubkraft oder andere Sensoren aufweisen (nicht dargestellt). Da sämtliche dieser Sensoren an ein gemeinsames Sensormodul angeschlossen sind, werden sämtliche Daten über ein gemeinsame Funkstrecke an eine Antenne 210 übertragen.

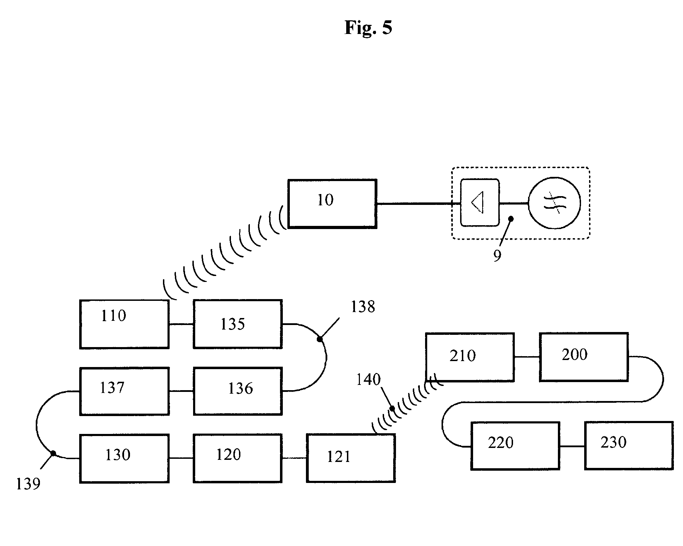

Die Signalverarbeitung der Messwerte im erläuterten Ausführungsbeispiel ist im Detail in Fig. 5 dargestellt:

Die von der Sensoreinrichtung 110 erzeugten Rohdaten werden zunächst in einem Verstärker 135 verstärkt bevor sie über eine analoge Datenleitung 138 in einen Filter 136 eingegeben werden. Danach erfolgt im AD-Wandler 137 ein Umwandlung in digitale Signale, die über einen digitalen Bus 139 dem Mikrokontroller 130 zugeführt werden. Der Mikrokontroller 130 sendet die Daten in geeigneter Form und gegebenenfalls nach einer Zwischenspeicherung an die Funkschnittstelle 120, die mit einer Antenne 121 verbunden ist. Über den digitalen Bus 139 und / oder zusätzliche Leitungen (nicht dargestellt) kann der Mikrokontroller 130 zudem die Funktion von vorzugsweise sämtlichen Komponenten des Sensormoduls steuern.

Über eine Funkstrecke, die vorzugsweise im mehrstelligen MHz-Bereich arbeitet, werden die Daten an die Funkschnittstelle 210 der Empfangseinheit 200 übertragen. Die Empfangseinheit 200 steht wiederum mit einer Auswerteeinheit 220 und einer Überwachungseinheit 230 in Verbindung, die Abweichungen der gemessenen Werte von vorbestimmten Sollwerten detektiert und gegebenenfalls geeignete Steuersignale an die Steuerung der spanabhebenden Werkzeugmaschine ausgibt.

Es ist möglich, die von der Sensoreinrichtung gemessenen Daten vor der Übertragung zu komprimieren. Auf diese Weise kann die Bandbreite der Übertragung besser ausgenutzt werden. Eine denkbare Kompressionsart besteht darin, nur die wesentlichen Eigenschaften des Signals (Minimum-Werte, Maximalwerte, Wendepunkte) zu übertragen. Diese Art der Datenüberragung wäre allerdings verlustbehaftet, d.h., in der Empfangseinheit 200 würde der tatsächliche Messdatenverlauf nur in den Grundzügen wiederhergestellt werden können. Denkbar sind ebenfalls verlustlose Algorithmen, bei denen z.B. das häufige Auftreten gleichartiger Messsignale in der Datenübertragung zusammengefasst und mit einer Kennzeichnung versehen wird. Möglich ist auch die Verwendung von Kompressionsverfahren z.B. MPG-1, Part 3.

Der oben erläuterte Signalverlauf stellt lediglich eine Möglichkeit zur Signalverarbeitung dar. Beispielsweise können die Messwerte auch bereits unmittelbar am Ausgang des Verstärkers 135 oder sogar der Sensoreinrichtung 110 digitalisiert werden, um nachfolgend einen digitalen Filter anzuordnen, der beispielsweise Bestandteil des Mikroprozessors 130 sein kann. Umgekehrt kann die auf dem Sensormodul 100 angeordnete Elektronik auch vollständig analog arbeiten und die Daten als analoge Funksignale an die Empfangseinheit 200 übertragen.

In einer weiterentwickelten Ausführungsform (nicht dargestellt) könnte das Sensormodul 100 eine Internetadresse besitzen und eine Datenkommunikation über das Internet und / oder ein Intranet ermöglichen. Unter Verwendung des TCP/IP Protokolls, des UDP Protokolls oder eines anderen Internet-Protokolls könnte man dann mit dem Sensormodul 100 über das Internet oder ein Firmen-Intranet kommunizieren. Dabei hat die Empfangseinheit 200 und / oder die Auswerteeinheit 220 und / oder die Überwachungseinheit 230 eine Art Brückenfunktion, d.h. sie nimmt TCP/IP-Pakete an und leitet die Pakete oder die darin enthaltene Information weiter an das Sensormodul 100. Auf dem Rückweg von Messdaten vom Sensormodul 100 zum Internet/Intranet wäre derselbe Weg denkbar.

Anstelle oder zusätzlich zur Internet/Intranetanbindung kann die Empfangseinheit 200 und / oder die Auswerteeinheit 220 und / oder die Überwachungseinheit 230 auch eine Schnittstelle für ein analoges Modem und / oder eine ISDN-Verbindung bereitstellen, um auf diesem Weg Daten vom Sensormodul aus der Ferne abfragen zu können und gegebenenfalls Steuersignale an das Sensormodul schicken zu können.

## Patentansprüche

1. Sensorsystem für eine spanabhebende Werkzeugmaschine (300), aufweisend:
a. eine Energieversorgungseinheit (101), die aus einem magnetischen Wechselfeld (B) induktiv Energie zur Versorgung zumindest einer Sensoreinrichtung (110) der spanabhebenden Werkzeugmaschine (300) bereitstellt;
b. zumindest eine Sensoreinrichtung, die eine in der spanabhebenden Werkzeugmaschine (300) auftretende Kraft und / oder ein Drehmoment und / oder den Körperschall in der spanabhebenden Werkzeugmaschine misst; und
c. eine Datensendeinheit (120), die drahtlos Daten sendet, die sich auf einen Wert beziehen, der von der zumindest einen Sensoreinrichtung (110) der spanabhebenden Werkzeugmaschine (300) gemessen worden ist.

2. Sensorsystem nach Anspruch 1, wobei das magnetische Wechselfeld und die drahtlose Datenübertragung unterschiedliche Frequenzen verwenden.

3. Sensorsystem nach Anspruch 2, wobei die Frequenz des magnetischen Wechselfelds ≤ 125 kHz beträgt und wobei die Frequenz der drahtlosen Datenübertragung > 125 kHz beträgt.

4. Sensorsystem nach Anspruch 3, wobei die Frequenz der drahtlosen Datenübertragung im MHz-Bereich liegt, insbesondere im Bereich ≥10 MHz.

5. Sensorsystem nach einem der vorhergehenden Ansprüche, ferner aufweisend eine Datenempfangseinheit, um eine bidirektionale Datenübertragung von und zu dem Sensorsystem zu ermöglichen.

6. Sensorsystem nach einem der vorhergehenden Ansprüche ferner aufweisend eine Empfangseinheit (210) zum Empfangen der von der Datensendeinheit gesandten Daten.

7. Sensorsystem nach Anspruch 6, wobei die Empfangseinheit (210) eine Schnittstelle zur Steuerung der spanabhebenden Werkzeugmaschine (300) aufweist.

8. Sensorsystem nach Anspruch 6 oder 7, wobei die Empfangseinheit (210) Messparameter der Sensoreinrichtung (110) einstellen kann.

9. Sensorsystem nach einem der vorhergehenden Ansprüche ferner ausweisend einen Prozessor (130), der die Funktion der Energieversorgungseinheit (101) und / oder der Sensoreinrichtung (110) und / oder der Datensendeeinheit (120) steuert.

10. Sensorsystem nach Anspruch 9 ferner aufweisend einen Speicher mit Anweisungen für den Prozessor (130).

11. Sensorsystem nach Anspruch 5 in Verbindung mit Anspruch 10, wobei die Anweisungen für den Prozessor (130) über die Datenempfangseinheit aktualisiert werden können.

12. Sensorsystem nach einem der vorhergehenden Ansprüche, wobei die Sensoreinrichtung (110) einen oder mehrere der folgenden Sensoren umfasst:
a. zumindest einen Dehnungsmessstreifen (114) zur Erfassung eines Drehmoments und / oder einer Kraft;
b. einen Beschleunigungssensor (113);
c. einen Sensor (111) für Körperschall und / oder Luftschall, insbesondere auf der Basis eines piezoelektrischen Elements;
d. einen Temperatursensor (112), insbesondere auf Halbleiterbasis und / oder auf Basis der Messung eines elektrischen Widerstands;

13. Sensorsystem nach Anspruch 12, wobei der zumindest eine Dehnungsmessstreifen (114) mit einem Kondensator verschaltet wird, um einen Tiefpass für ein gepulstes Eingangssignal zu bilden.

14. Sensorsystem nach Anspruch 12 oder 13, wobei mehrere Dehnungsmessstreifen (114) zur einer Wheatstone-Schaltung miteinander verbunden werden.

15. Sensorsystem nach einem der Ansprüche 12 - 14, wobei die von einem Sensor (111, 112, 113, 114) erzeugten elektrischen Signale digitalisiert werden und über einen drahtgeführten digitalen Bus (139) an die Datensendeeinheit (120) übertragen werden.

16. Sensorsystem nach einem der vorhergehenden Ansprüche ferner aufweisend eine Erzeugungseinheit (9, 10)) für das magnetische Wechselfeld, wobei die Erzeugungseinheit (9, 10) vorzugsweise ein Paar von Spulen (9) aufweist.

17. Sensorsystem nach einem der Ansprüche 12 - 16 aufweisen eine Mehrzahl von Sensoreinrichtungen (110), die an unterschiedlichen Bereichen der spanabhebenden Werkzeugmaschinen (300) angeordnet sind.

18. Sensorsystem nach Anspruch 17, ferner aufweisend eine Mehrzahl von Datensendeeinheiten(120), wobei die Mehrzahl von Sensoreinrichtungen (110) und die Mehrzahl von Datensendeeinheiten (120) durch ein gemeinsames erstes magnetisches Wechselfeld mit Energie versorgt werden.

19. Spanabhebende Werkzeugmaschine mit einem Sensorsystem nach einem der Ansprüche 1 - 18.
